# EUROPEAN PATENT SPECIFICATION

(11) **EP 2 997 841 B1**
(45) Date of publication and mention of the grant of the patent: **05.10.2016**
(21) Application number: 14185533.8
(22) Date of filing: 19.09.2014
(51) Int. Cl.: A41H 1/00, A41C 5/00

(54) **A method for fitting a bra**
Verfahren zum anpassen von einem Büstenhalter
Procédé permettant d'ajuster un soutien-gorge

(30) Priority: 16.09.2014 GB 201416350
(43) Date of publication of application: 23.03.2016
(73) Proprietor: Marks and Spencer Plc, London W2 1NW (GB)
(72) Inventor: Mercer, Julia, London W2 1NW (GB)
(74) Representative: Beattie, Alex Thomas Stewart

(56) References cited:
- GB-A- 2 355 385
- US-A1- 2011 218 876
- US-A1- 2014 019 087

## Description

This invention relates to a method of bra fitting.

Bra technology has reached a high level of refinement in recent decades. Bra construction must address engineering challenges that are unique in the clothing field. Breast tissue generally does not support its own weight, and should ideally be held in place and prevented from significant movement. Bras therefore need to be strong and reliable in their construction. Aesthetic considerations often require that breasts are held in particular shapes, or are minimised as much as possible. At the same time, bras should be light, user-friendly and unobtrusive, and should ideally be presentable and formed from attractive fabrics.

Also, many women wear a bra for substantially the entire day (with some wearing a bra at night as well), and so comfort is very important.

If a bra provides inadequate support, then over time this can lead to stretching of the skin of the wearer's breasts, and even to damage to the Cooper's ligaments, which provides a little of the support for breasts. This is particularly the case for sports bras, which may be worn for endurance sports such as long-distance running.

Despite the advances and refinement in bra technology, a modern and well-constructed bra will still not fulfil its function if it is the wrong size for the wearer. Selection of the correct sized bra is therefore very important for the support and long-term maintenance of a wearer's breasts, and for the wearer's comfort. If a bra is not properly fitted, the wearer's breasts may occupy only some of the cups, or may bulge out from the top and/or sides of the cups. The result may be inadequate support, or that the bra may dig into the skin of the wearer, which can lead to discomfort as well as more serious reported health problems such as headaches and even a tingling sensation in the wearer's hands.

Providing a correctly- and appropriately-fitting bra is therefore a technical problem, and fitting a bra correctly for a woman provides a technical contribution.

In addition to this, even if a user is able to determine the correct size of bra, there are certain styles of bra that may be inappropriate for an individual because of her body type and shape.

Some investigations have revealed that as many as 80% of women wear a bra that is not of the correct size. Even where a woman does have a correctly-fitting bra, if the woman changes shape, for instance due to weight gain, weight loss or pregnancy, it can be difficult to determine how to choose a new size. This is a common situation, with the average size for women in the UK increasing over recent years and decades.

US2011/218876 discloses an online bra recommendation system and method to provide one or more customer specific size and style recommendations. The recommendations are based on a calculated customer specific bra size and one or more customer style preferences. The calculated customer specific bra size is based on customer measurements. The customer measurements may include a measurement above the bust, around the fullest part of the bust and around the ribcage, under the bust. The customer may be instructed as to how to take appropriate measurements. The recommendation may further be based on feedback regarding current bra size and fit issues. The recommendation may further be based on one or more feature selections. The information may be collected through an online system, the recommendation made by a professional and the recommendation communicated to the user through the online system.

The present invention provides an improved fitting method for swiftly and reliably determining the correct size of bra for a woman. The method can also determine styles of bra that are likely to be suitable for a woman, i.e. that will remain in place and provide adequate support.

One aspect of the present invention provides a method of determining bra fitting measurements for a subject, comprising the steps of: determining an underband measurement and a cup size for an existing bra of the subject; taking a current measurement of the underband measurement of the subject, to determine an initial underband measurement; analysing the fit of the cups of the existing bra on the subject to reach a first calculated cup size, wherein the step of analysing the fit of the cups of the existing bra on the subject to reach the first calculated cup size comprises: if the subject's breasts bulge at the fronts of the cups of the existing bra, or at the sides of the cups of the existing bra, but not both, increasing the first calculated cup size by a first cup size amount; if the subject's breasts bulge both at the fronts of the cups and at the sides of the cups of the existing bra, increasing the first calculated cup size by a second cup size amount, which is greater than the first cup size amount; or if the subject's breasts do not bulge at the fronts of the cups of the existing bra, or at the sides of the cups of the existing bra, making no adjustment to the first calculated cup size; if the cup size of the existing bra is below a first cup size threshold and the first calculated cup size is equal to or greater than the first cup size threshold, then adding a first amount to the initial underband measurement to reach a first adjusted underband measurement; or if the cup size of the existing bra and the first calculated cup size are both below the first cup size threshold, or if the cup size of the existing bra and the first calculated cup size are both above the first cup size threshold, then: comparing the existing cup size against a second cup size threshold; if the existing cup size is greater than or equal to the second cup size threshold, then adding a second amount to the initial underband measurement to reach a first adjusted underband measurement; or if the existing cup size is less than the second cup size threshold, then adding a third amount to the initial underband measurement to reach a first adjusted underband measurement; and determining a final underband measurement and a final cup size for the subject, wherein the final underband measurement is the first adjusted underband measurement, and the final cup size is the first calculated cup size.

Advantageously, the method comprises the steps of: comparing the initial underband measurement against a threshold distance; if the initial underband measurement is more than the threshold distance, adding a fourth amount to the initial underband measurement to reach the first adjusted underband measurement, instead of adding the first or second amount to the initial underband measurement.

Preferably, the fourth amount is less than the first amount.

Conveniently, the method further comprises the steps of: comparing the final underband size to the underband measurement of the existing bra; If the final underband size is greater than the underband measurement of the existing bra, reducing the calculated cup size by a determined amount; or If the final underband size is less than the underband measurement of the existing bra, increasing the calculated cup size by a determined amount.

Advantageously, the final underband size is constrained to deviate from the underband size of the existing bra by a maximum amount.

Preferably, the maximum amount is 2.54cm (one inch), and the determined amount by which the calculated cup size is increased or reduced is one cup size.

Conveniently, the method comprises the step of further adjusting the first adjusted underband measurement, by: if the underband of the existing bra is loose and/or arches upwardly across the back of the subject, reducing the final underband measurement by a determined amount; or if the underband of the existing bra is tight across the back of the subject and/or digs into the subject's skin, increasing the final underband measurement by a determined amount.

Preferably, the first amount is one cup size, and the second amount is two cup sizes.

Conveniently, the method further comprises defining a maximum difference between the final cup size and the cup size of the existing bra, so that if a final cup size is determined to be different from the cup size of the existing bra by more than the maximum difference the final cup size is adjusted to be different from the cup size of the existing bra by the maximum difference.

Advantageously, the maximum difference is three cup sizes.

Preferably, the maximum difference, excluding any adjustment made as a result of the steps set out above of comparing the final underband size to the underband measurement of the existing bra; If the final underband size is greater than the underband measurement of the existing bra, reducing the calculated cup size by a determined amount; or If the final underband size is less than the underband measurement of the existing bra, increasing the calculated cup size by a determined amount, is two cup sizes.

Another aspect of the present invention provides a method of providing a bra, comprising: determining a final underband measurement and a final cup size and providing a bra having an underband measurement and cup size which correspond to the final underband measurement and cup size.

Conveniently, the step of providing a bra comprises the step of selecting the bra from among a plurality of bras having different measurements.

Advantageously, the method comprises: determining whether the subject has narrow, medium or wide shoulders; determining whether or not the subject has a gap above a determined size between her breasts; and providing only certain styles of bra, and excluding one or more styles of bra, based on the width of the subject's shoulders and whether or not the subject has a gap above the determined size between her breasts.

Preferably, if the subject has narrow shoulders; or if the subject has medium shoulders and does not have a gap above the determined size between her breasts, a balcony style of bra is excluded.

Conveniently, if the subject has broad shoulders; or if the subject has medium shoulders and does have a gap above the determined size between her breasts, a plunge style of bra is excluded.

A further aspect the invention provides a computer program comprising computer program code adapted to carry out all of the steps of any of any one of the above when the program is run on a computer.

Another aspect of the invention provides a computer readable medium comprising a computer program according to the above.

So that the invention may be more readily understood, embodiments thereof will now be described, by way of example, with reference to the accompanying drawings, in which:
Figure 1 shows a series of questions that may be asked as part of a method embodying the present invention;
Figures 2, 3a and 3b are example images that may be shown to a subject as part of a method embodying the present invention;
Figure 4 is a flow chart showing steps in a method embodying the present invention;
Figures 5a to 5d show different known styles of bra; and
Figure 6 shows further steps of a method embodying the present invention.

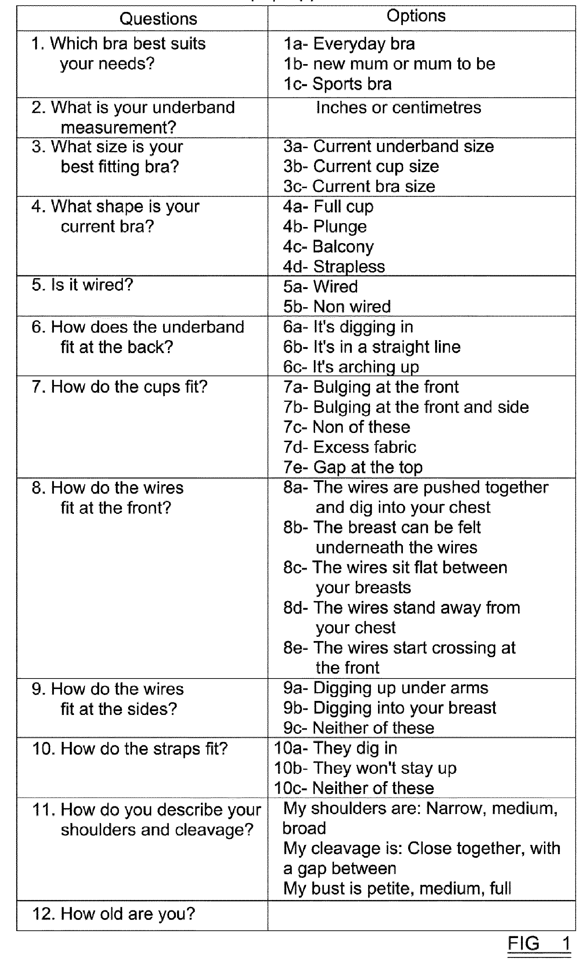

With reference to figure 1, in an initial stage of a method embodying the invention, a subject is asked to provide some information about herself. Figure 1 shows an exemplary set of questions that can be used as part of the method.

In question 1, the subject is asked which kind of bra best suits the subject's needs. The subject may answer that she would like an "everyday" bra, a bra for a new mother or pregnant woman, or a sports bra.

In question 2, the subject is asked to provide her current underband measurement. This measurement comprises a measurement of the circumference of the subject's chest, immediately beneath the lower edges of the subject's breasts, and this will generally be taken using a tape measure.

In order to complete the method, a subject must have an existing bra, and preferably an existing bra that the subject believes is at least a reasonable fit. Information about this bra provides input for some of the steps of the method.

In question 3, the subject is asked for the underband size, cup size and brand of the existing bra.

In question 4, the subject is asked about the shape/style of the existing bra, and may answer that the bra is full cup, plunge, balcony or strapless.

In question 5, the subject is asked whether the existing bra is wired (i.e. it includes underwires) or non-wired.

In question 6, the subject is asked about the fit of the underband of the existing bra. The subject may answer that the underband digs in, or passes in a straight line across the subject's back, or arches up across the subject's back.

In question 7, the subject is asked about the fit of the cups of the existing bra. The subject may answer that:
- her breasts bulge at the fronts of the cups;
- her breasts bulge at both the fronts and the sides of the cups;
- there is excess fabric in the cups;
- there is a gap at the top of each cup (i.e. the subject's breasts only fill the lower part of each cup); or
- none of the above.

In response to this question the subject may answer that more than one of the answers is the case. For example, a subject may answer that there is excess fabric in the cups and that there is a gap at the top of each cup. However, there may be combinations of answers that are defined as being implausible, for instance if the subject answers that her breasts bulge at both the fronts and the sides of the cups, and also that there is excess fabric in the cups. If such a combination of answers is given, the subject may be asked to reconsider the answers that have been given.

In questions 8 and 9, the subject is asked how the wires of the existing bra fit. However, if the subject responded to question 5 that the existing bra is non-wired, some or all of the same questions may be asked but with reference to the seams of the existing bra that extend between the lower edges of the cups and the upper edge of the chest band (i.e. the seams which are located in substantially the same place as underwires, when present). In other embodiments of the invention, if the subject replies that the existing bra is not wired, one or both of questions 8 and 9 may be skipped.

In question 8, the subject is asked about the fit of the wires at the front of the bra. The subject may answer that:
- the wires are pushed together and dig into her chest;
- one or both of the wearer's breasts can be felt underneath the wire (i.e. protruding below the wire), particularly when the subject raises her arms;
- the wires sit flat between the subject's breasts;
- the wires stand away from the subject's chest; or
- the wires cross each other at the front.

Once again, the subject may answer that more than one of these is the case.

In question 9 the subject is asked about the fit of the wires of the existing bra at the sides. The subject may answer that the wires dig in under her arms, that the wires dig into the sides of her breasts, or neither of these.

In question 10 the subject is asked about the fit of the shoulder straps of the existing bra (this question will be skipped if the existing bra is a strapless bra). The subject may answer that the straps dig into her shoulders, that the straps will not stay on her shoulders (i.e. tend to fall off sideways), or neither of these.

In question 11, the subject is asked about her shoulders and cleavage.

As a first part of this question, the subject is asked whether she has narrow, medium or broad shoulders. One way to determine this is to take a measurement across the user's shoulders, which is then compared to the width of the subject's hips. If the subject's shoulders are of the same, or substantially the same, width as her hips, it may be determined that the subject has medium shoulders. If the subject has shoulders which are substantially wider than her hips, she may be determined to have broad shoulders, and if the subject has shoulders which are substantially narrower than her hips, she may be determined to have narrow shoulders. Although this method may vary somewhat depending on whether the subject has wide or narrow hips, it has been found to be a useful guide.

Alternatively, the subject's shoulders can be measured and compared to appropriate thresholds. In a preferred embodiment, the subject's shoulders are measured in a straight line from the tip of one shoulder in a straight line across to the tip of the other shoulder, across the front of the subject's chest. Using this method a width of around 33cm to 36cm may be classified as narrow, a width of 36cm to 39cm may be considered to be medium, and a width of 39cm to 42cm may be classified as broad.

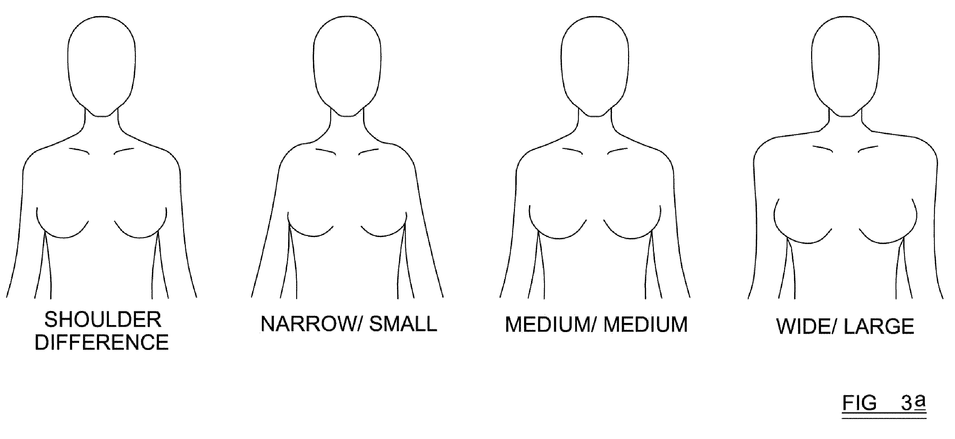

As a further alternative, the subject or an assisting person may be shown some pictures of figures having different proportions, and asked to identify which of the pictures corresponds most closely to the subject's proportions. An example is shown in figure 3a, which shows (on the left) superimposed images of wide and narrow shoulders, and in the next three images examples of narrow, medium and wide shoulders respectively.

In a second part of question 11, it is determined whether the subject has a significant gap between her breasts (which may be 2cm, or another convenient distance), or whether the subject has a "closed" cleavage, with little or no gap between her breasts. Ideally, a measurement would be taken of the distance between the subject's nipples, and if this measurement is available then in preferred embodiments a distance of around 18-20cm (or anything less than 20cm) is considered to be a "closed" cleavage, and a distance of around 20.5-22cm (or anything over 20.5cm) is considered to be an "open" cleavage.

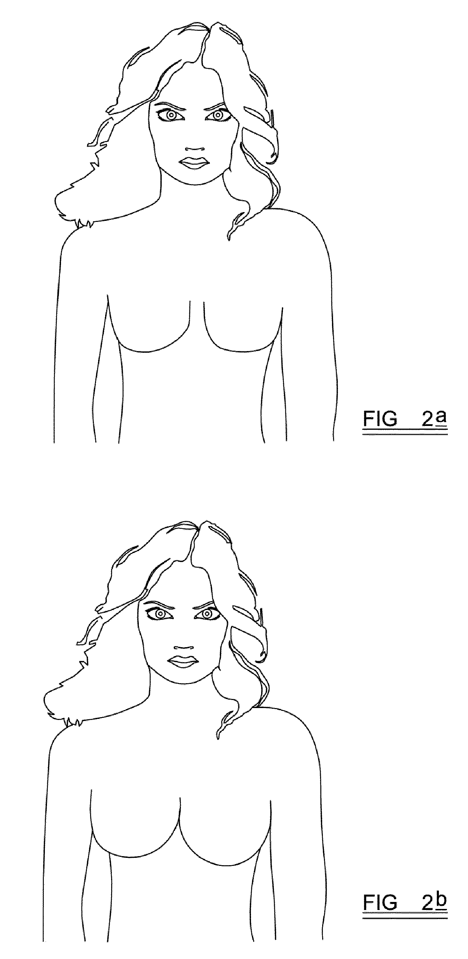

It is expected, however, that most subjects would prefer not to take this measurement. As a preferred alternative, the subject may be shown two or more images of different body types and asked to select which of these corresponds most closely to her own body shape. If the method is being carried out using a paper chart, booklet or manual, the images may be printed, or if a computerised method is being used then images may be presented on a screen. Figures 2a and 2b are examples of images which may be presented, with figure 2a depicting an "open" cleavage, with a significant gap between the figure's breasts, and figure 2b depicting a "closed" cleavage, with no gap between the figure's breasts.

In a third part of question 11, the subject is asked whether her bust is petite, medium or full. For this part the subject's bust is not compared against strict thresholds, but a general determination is made of the general size of the subject's bust (for instance, when compared against the range of bust sizes that are encountered in daily life).

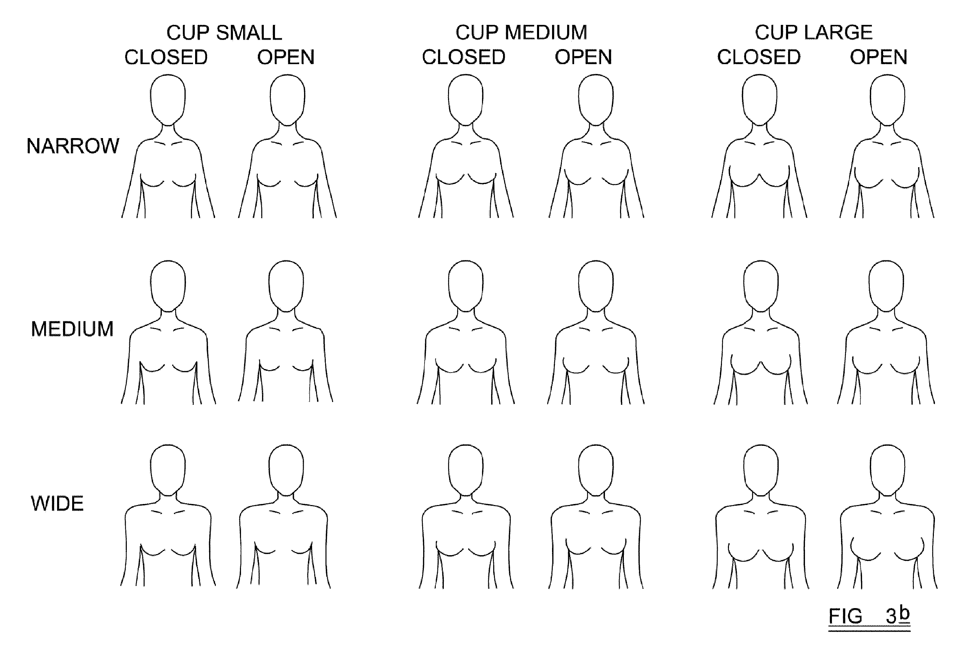

As an alternative way to gather the information needed for question 11, the user may be presented with a set of images and asked to indicate the image that most closely matches her body type. Figure 3b shows a more comprehensive matrix of figures, with narrow shoulders being shown in a top row, medium shoulders being shown in a middle row, and wide shoulders being shown in a bottom row.

Intersecting with this, the left two columns show a small cup size with an open and closed cleavage, respectively. The middle two columns show a medium cup size, with an open and closed cleavage, respectively. Finally, the right two columns show a large cup size, again with an open and closed cleavage, respectively. The subject or an assisting person may be shown this matrix of figures and asked to identify which figure most closely matches that of the subject. The answer will provide the information needed for all three sections of question 11.

Finally, in question 12 the subject is asked her age.

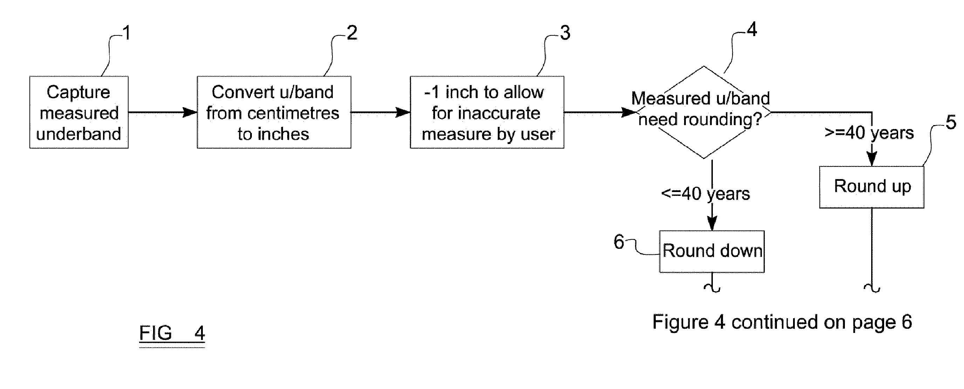

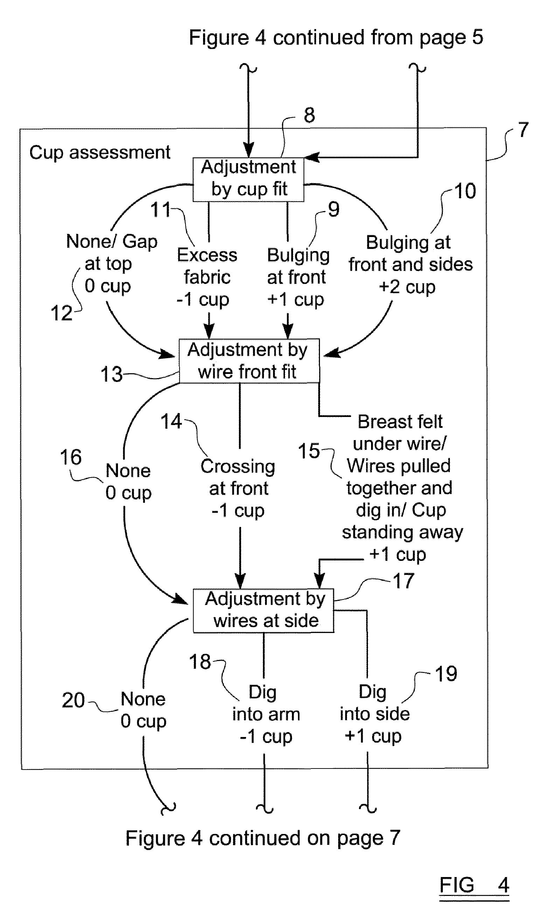

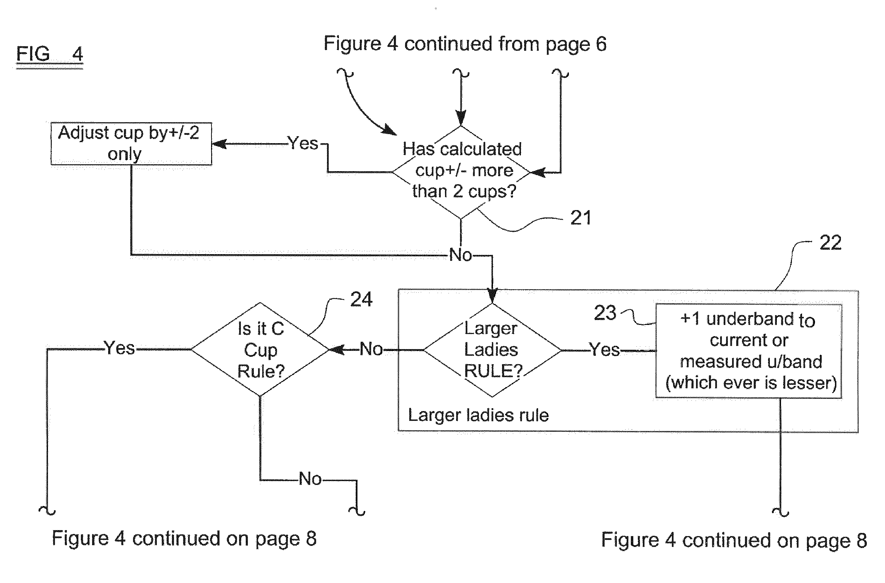

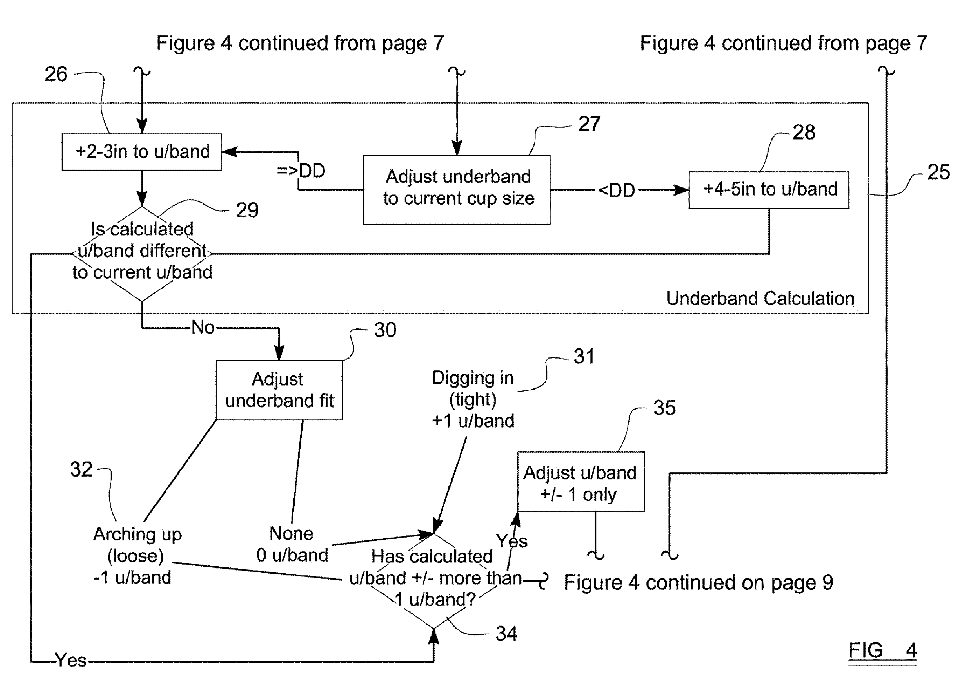

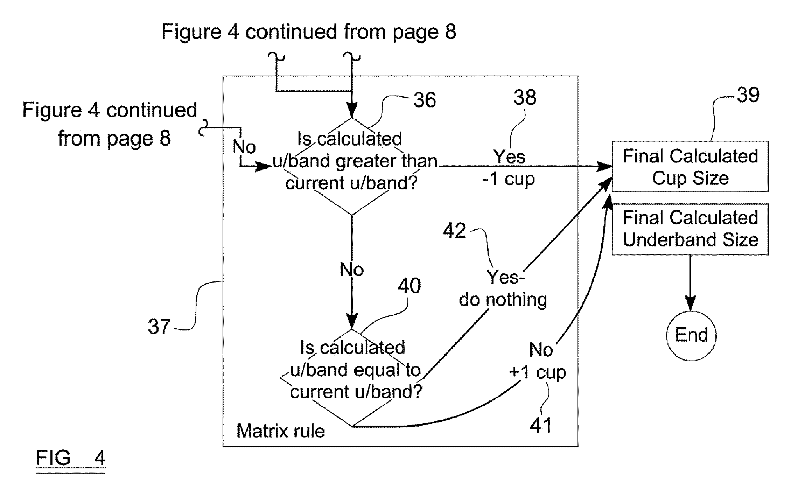

Figure 4 shows a flow chart representing steps in a method embodying the present invention, that may be followed once the questions shown in figure 1 have been answered. Figure 4 shows a flow diagram representing steps in a fitting method embodying the present invention. It should be understood that the inventive method does not necessarily involve all of the steps of the method shown in figure 4, but may involve only a subset of these features. Methods embodying the present invention may also include further steps which are not shown in this document.

The method may be carried out by a user in private (either alone or with the help of an assisting person), or may be carried out by another person, who may for example be a fitter in a store. The fact that the method can be carried out in private will be advantageous for women who are reluctant or unable to visit a store to be measured by a professional fitter, for example for reasons of modesty or mobility.

In a first step 1, the underband measurement that was acquired in question 2 is captured.

In the UK, bra chest band measurements are generally expressed, and understood by consumers, in inches. Therefore if the measurement is taken in a unit other than inches, such as centimetres, the measurement is converted (at a conversion step 2) to inches. Of course, the underband measurement can be taken in any suitable units, and this may not be inches, particularly in countries outside the UK where other conventions are used.

If the underband measurement has been made by the subject herself, or by an assisting person who is not a trained fitter, the initial measurement may be reduced (at a next step 3) by an amount, to account for the fact that most untrained people will not pull a tape measure sufficiently tightly to get a correct reading. In some embodiments this amount may be 2.54cm (one inch).

Bra underband sizes are expressed in whole inches. Therefore if the initial underband measurement (following reduction, if applicable) is not a whole number, this number is rounded in a rounding step 4. In the embodiment shown, the number may be rounded up (step 5) or down (step 6) in dependence on the age of the subject. A threshold age is determined and the number is rounded down if the subject is lower than the threshold age, and is rounded up if the subject is the threshold age or older. In some embodiments, the threshold age may be 40 years, although the invention is not limited to this. This rule takes account of the fact that, for most people, skin firmness decreases with increasing age. A subject older than 40 years will therefore tend to need to wear a bra with a larger underband.

If the underband measurement is already a whole number of inches, no rounding occurs at this step 4.

The method then proceeds to a cup fit assessment procedure 7. In a first step 8 of this procedure, the fit of the subject's breasts into the cups of the existing bra (as explored in question 7) is analysed. If the subject's breasts bulge at the fronts of the cups (but not at the sides of the cups), or (not shown) if the subject's breasts bulge at the sides of the cups (but not at the fronts of the cups), then (at step 9) the cup size is increased by a first amount, which is preferably one cup size. If, however, the subject's breasts bulge both at the fronts of the cups and at the sides of the cups, then (at step 10) the cup size is increased by a second, larger amount, which is preferably two cup sizes.

Alternatively, if there is excess fabric of the cups, meaning that the subject's breasts do not entirely fill the cups, the cup size is reduced (at step 11) by an amount, which is preferably one cup size.

As a further alternative, if the subject's breasts fit well into the cups of the existing bra, with no bulging at the front or sides and without significant excess fabric (whether or not there is a gap at the top of each cup), then the cup size is (at step 12) not adjusted upwardly or downwardly.

The next step is an optional adjustment by front wire fit (step 13). This step can be carried out if the existing bra is an underwired bra. As discussed above, if the existing bra is not underwired, this step can still be carried out, but with reference to the appropriate seams of the existing bra. If this is done then references to wires below should be read as references to seams. Alternatively, this step can be skipped if the existing bra is not underwired, particularly if the existing bra does not have prominent seams in the appropriate locations.

In this step, the information gathered in question 8 is used. If the underwires of the cups of the existing bra (or, if the subject's existing bra is not wired, of the appropriate seams of the existing bra) tend to cross at the front (indicating that there is not sufficient tension across the bridge that connects the cups), this indicates that the cup size of the existing bra is too large, and the cup size is (at step 14) reduced by an amount, which is preferably one cup size.

Alternatively, if one or both of the wearer's breasts can be felt under the wire(s), and/or if the cups "stand away" from the subject, and/or if the wires are pulled together when the subject wears the existing bra and dig into the subject's chest (particularly, into the inner edges of the subject's breasts) this indicates that the cups of the existing bra are too small, and the cup size is (at step 15) increased by an amount, which again is preferably one cup size.

As a further alternative, if neither of the above is applicable, no cup size adjustment is made (step 16).

Whether the cup size is adjusted or not as part of this stage, the next step 17 is an adjustment based on the appearance of the underwires of the existing bra at the outer sides of the cups (i.e. the sides of the cups close to or under the subject's armpits), and here the information gathered in question 9 is used. Once again, if the existing bra is not wired this step can be carried out with reference to the seams of the existing bra, or as a further alternative if the existing bra is not wired then this step can be skipped.

If the underwires dig upwardly into or towards the subject's arms/armpits (indicating that the underwires are too long), then at step 18 the cup size is reduced by an amount, which is preferably one cup size.

Alternatively, if the underwires dig inwardly into the subject's sides (or the outer sides of the wearer's breasts) then (at step 19) the cup size is increased by an amount, which is preferably one cup size.

If neither of these is the case, then the cup size is not adjusted (step 20).

Whether or not the cup size is adjusted at this step 17 (or if this step is skipped), the next step is a maximum adjustment step 21. In this step, the total amount by which the cup size has been adjusted (compared to the cup size of the existing bra) as part of the cup fit assessment procedure 7 is determined, and compared to a maximum adjustment. If the total amount by which the cup size has been adjusted as part of the procedure 7 is greater than the maximum adjustment (whether in the up or down directions), the cup size is altered so that the total adjustment from the cup size of the existing bra is the maximum adjustment. In the embodiment shown, the maximum adjustment is plus or minus two cup sizes.

It should be noted that this maximum applies only to the cup fit assessment procedure 7, and the cup size may be adjusted further elsewhere in the method.

It is envisaged that there may be a maximum downward adjustment that is different from a maximum upward adjustment, although this is not shown in the example of figure 4.

At a next step 22, a size rule is applied. In this step, a threshold underband size is determined. If the subject has a rounded underband size (as determined at steps 4 to 6) which is of the threshold size or greater, a first size rule 23 is applied. Under this first size rule, an amount is added to the underband size. This takes account of the fact that, where a subject has an underband measurement which is above a certain size, the subject is likely to have a relatively high proportion of body fat in the region of the underband, and the surface of the subject's body in the region of the underband is therefore likely to be relatively compressible. In this case, a larger underband is preferred or required.

In some embodiments the amount may be 2.54cm (one inch), although the invention is not limited to this.

In the embodiment shown, the threshold size is 101.6cm (40 inches), although in other embodiments the threshold size may be larger or smaller than this.

In the embodiment shown, the amount is added to either the rounded underband size as determined at steps 4 to 6, or the underband size of the existing bra provided by the subject, whichever is less. In other embodiments, the amount may be added to the rounded underband size, regardless of the size of the existing bra.

If the subject's rounded underband size is less than the threshold size, then (at a decision step 24) a determination is made as to whether the subject falls under a "C cup rule". The subject qualifies where the cup size of her existing bra is C or D, but has been adjusted upwardly as part of the cup fit assessment procedure 7 so that it is size DD or above.

Following this determination, the subject's underband size is adjusted (step 25).

If it is determined that the subject does fall under the C cup rule, the method proceeds to step 26, in which the underband size as determined at steps 4 to 6 is increased by a first amount, which is preferably 5.1 - 7.6cm (2-3 inches) (in preferred embodiments, this first amount is 5.1 cm (2 inches)).

Alternatively, if the subject does not fall under the C cup rule (i.e. the cup size of the existing bra and the cup size calculated during the cup fit assessment procedure are both less than DD, or the cup size of the existing bra and the cup size calculated during the cup fit assessment procedure are both DD or above), then at step 27 the underband size is adjusted based on the cup size of the subject's existing bra. If this cup size is less than DD, the method proceeds to step 26 in which (as discussed above) the underband size is increased by the first amount. However, if the cup size is less than DD, then the subject's underband size is (at step 28) increased by a second amount, which is greater than the first amount. Preferably, the second amount is 10.2 - 12.7cm (4-5 inches) (in preferred embodiments, this second amount is 10.2cm (4 inches)).

More generally, when the "C cup rule" is applied, a first procedure for adjusting the subject's underband measurement is applied if the subject does qualify for the C cup rule (i.e. the underband measurement of the existing bra was below a threshold, which in this example is DD, and the calculated cup size is equal to or above the threshold), and a second, different procedure for adjusting the subject's underband measurement is applied if the subject does not qualify for the C cup rule.

Whether the underband is adjusted by the first amount or the second amount, in a next decision step 29 the subject is asked whether the calculated underband size is different to the underband size of the existing bra. If the calculated underband size is not the same as the existing underband size, then at step 30 the underband fit is adjusted, using the information gathered in question 6. If the underband digs in and is tight then, at step 31, the underband size is increased by an amount, which is preferably 2.54cm (one inch). If however, the underband arches up across the subject's back and/or is loose, then at step 32 the underband size is decreased by an amount, which is preferably 2.54cm (one inch). If neither of these is the case then, at step 33, the method proceeds without any adjustment to the underband size.

The next step in the method is an underband adjustment step 34. Whatever the result of the decision taken at step 30 (if applicable), this underband adjustment step 34 is the next stage. In addition, if at step 29 it is determined that the calculated underband measurement is the same as the existing underband measurement, then the method proceeds directly from step 29 to this underband adjustment step 34.

In preferred embodiments of the invention, such as the method shown in figure 4, there is a set maximum difference between the underband size of the subject's existing bra and the new underband size that is calculated by the method. In the example shown, this maximum difference is 2.54cm (one inch), although a different maximum may be set (it is also envisaged that different maxima may be set for increasing the underband size and decreasing the underband size, although this is not shown in the figures).

At the underband adjustment step 34, it is determined whether the calculated underband size is different from the existing underband size by more than the set maximum. If so, the calculated underband size is adjusted (at step 35) so that it deviates from the existing underband size only by the set maximum amount. The method then proceeds to a decision step 36.

Alternatively, if the calculated underband size is not different from the existing underband size by more than the set maximum, the method proceeds directly to the decision step 36 without further adjustment of the underband size.

Finally, if the measured underband size is greater than the threshold (determined at step 22) and the underband is increased at step 23, then the method proceeds directly from step 23 to this decision step 36.

The decision step 36 forms part of a rule 37 referred to as the "matrix rule". At the decision step 36, it is determined whether the calculated underband size is greater than the existing underband size. If the calculated underband size is greater than the existing underband size, then (at step 38) the cup size is decreased by an amount, which is preferably one size. The calculated cup size and underband size are then final, and the method may proceed to the step of presenting the final cup size and underband size to the subject, at step 39.

If, on the other hand, the calculated underband size is not greater than the existing underband size, then at step 40 it is determined whether the calculated underband size is equal to the existing underband size. If the calculated underband size is not equal to the existing underband size (i.e. it is less than the existing underband size) then at step 41 the cup size is increased by an amount, which is preferably one cup size. The calculated cup size and underband size are then final, and the method may proceed to the step of presenting the final cup size and underband size to the subject, at step 39.

As a final possibility, if the calculated underband size is the same as the existing underband size, then the calculated underband size and cup size are final, and the method may (at step 42) proceed to the step of presenting the final cup size and underband size to the subject, at step 36, without further adjustment.

In the matrix rule, where it is determined that the underband size has decreased, the cup size is increased, and conversely where it is determined that the underband size has increased, the cup size is decreased. The amounts by which the underband size is increased/decreased and by which the cup size is increased/decreased are selected so that they effectively cancel each other out, with respect to cup volume. As the underband size of a bra increases, the volume of the cups increases. Therefore, simultaneously increasing the underband size and decreasing the cup size, or simultaneously decreasing the underband size and increasing the cup size, in this way allows the cup volume to remain constant or substantially constant. The underband size can therefore be adjusted without substantially affecting the way in which the wearer's breasts fit into the cups.

The up and down adjustments of the calculated cup size at steps 38 and 41 to compensate for an increase or a decrease in the underband size are, as discussed above, known as a "matrix rule". It is understood that this is not known in current bra fitting techniques.

The final measurements are then presented to the subject.

In one way of carrying out the method, a flow chart, booklet or manual is provided, which can be worked through by the subject herself, or by an assisting person such as a fitter. The flow chart, booklet or manual may take any suitable form, for instance having numbered pages or sections and instructions for which page or section to turn to next. Boxes or other areas may be provided in which parameters (such as initial, "working" or final measurements) may be written as the fitting method is worked through. Pictures may be provided on the flow chart, booklet or manual to assist the subject and/or the assisting person, for instance to illustrate what is meant by a loose, arching underband in step 32.

As an alternative, a computerised method may be implemented to work through the steps of the fitting method. This may have the advantage that initial, working and final measurements can be recorded automatically, and the computer program may jump conveniently to the next step of the method, skipping unnecessary steps and saving the subject/assisting person time and effort.

After a final underband and cup size have been determined, in an optional next step a bra is provided to the subject, which has the determined measurements. This bra may be selected from a range in a storeroom or warehouse, or from a shop floor or other display. The bra may alternatively be ordered, and if a computerised method is used then the user may be presented automatically with a range of available bras, having different colours, styles and/or materials, that are of the correct size (as determined by the fitting method), from which the subject may readily choose. Images of these bras may be presented on a screen (for instance, or a mobile or tablet device) for the subject's convenience. In some embodiments the subject may simply select a bra from those presented on the screen to order the bra, or to begin an ordering process.

As another possibility, a bra may be made to the determined measurements following completion of the fitting method.

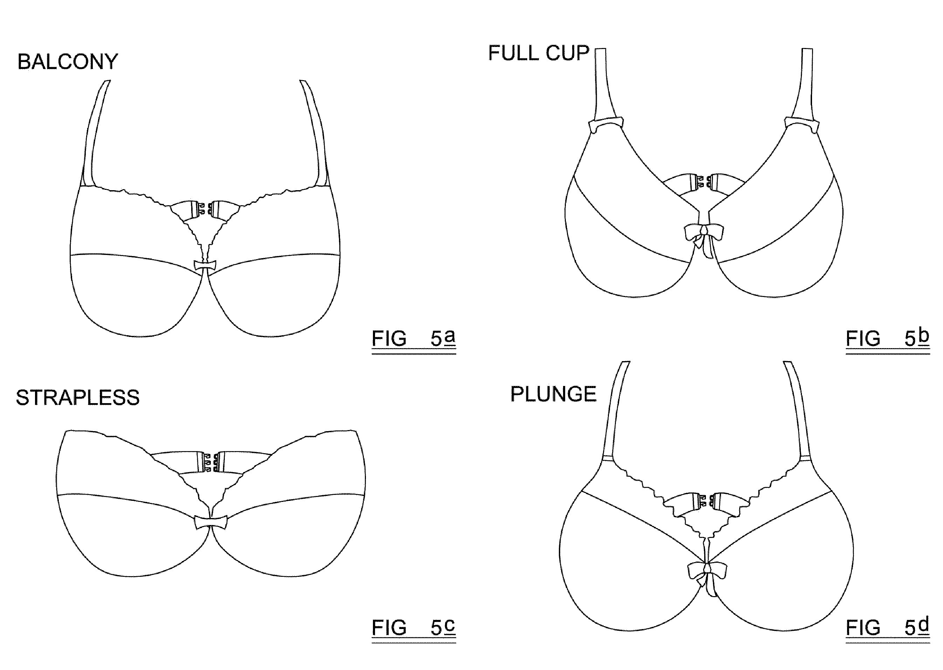

In an optional further step, the subject's body shape (separate from the subject's underband and cup size) may be analysed to determine which styles of bra may be most suitable for the subject. Four popular styles of bra are shown in figures 5a to 5d, and these are balcony (shown in figure 5a), full cup (figure 5b), strapless (figure 5c) and plunge (figure 5d). The skilled reader will be familiar with these styles.

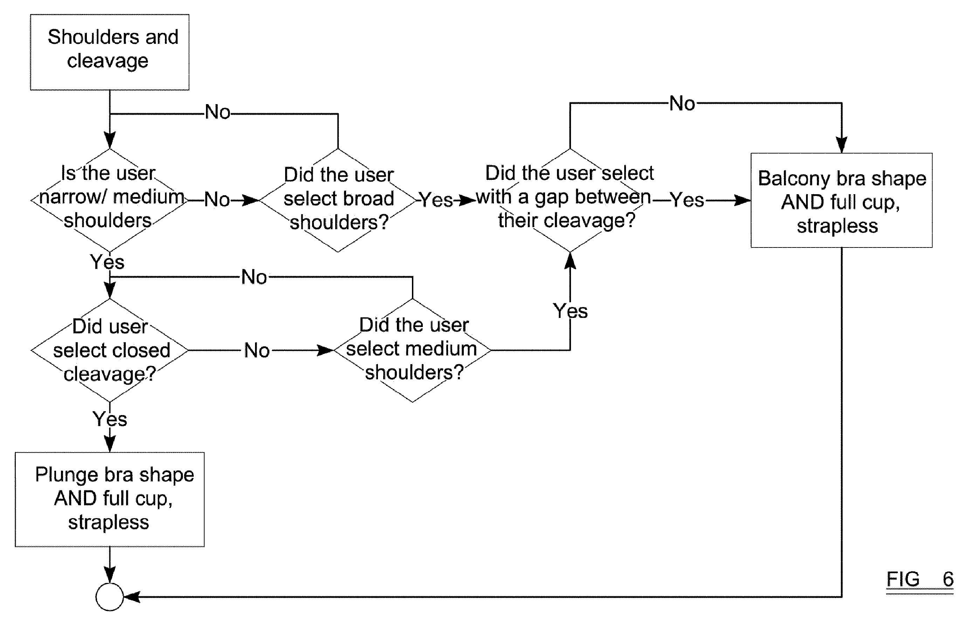

Figure 6 shows steps in a method for relating these styles the subject's body shape, in particular the subject's shoulders and cleavage, using the information gathered in question 11.

Depending on the breadth of the subject's shoulders, and whether or not the subject has a significant gap between her breasts, certain styles may be more suitable for the subject.

As can be seen from figure 6, if the subject has narrow shoulders, or has medium shoulders and a closed cleavage, then a plunge bra, a full cup regular bra or a full cup strapless bra are most suitable (but a balcony bra is likely to be unsuitable).

If the subject has broad shoulders (regardless of whether she also has a closed cleavage), or if the subject has medium shoulders and a significant gap between her breasts, then a balcony bra, a full cup regular bra or a full cup or balcony strapless bra are most suitable (but a plunge bra is likely to be unsuitable).

This body shape analysis can be carried out to give additional advice to the subject about the correct type of bra to wear. For instance, a subject with narrow shoulders and a closed cleavage should be discouraged from wearing a balcony bra, as it is likely to slip off her shoulders during movement, potentially leading to annoyance, a lack of modesty and a lack of proper support.

If the subject is offered a range of bras after the fitting process, for instance if the method is carried out by a computerised method which presents images of a selection of bras, then this range may be filtered so that only bras which are suitable for the subject appear in the range.

It will be understood that methods embodying the present invention may provide a simple, methodical and practical way of determining correct bra measurements for a subject. It will also be understood that the methods disclosed herein do not represent the collation and organisation of methods which are already known to bra fitters, but are based on new techniques which have been devised for the purposes of the invention.

In the description above, reference may be made in a particular step to adjustment, increase or decrease of an underband measurement or cup size. Where this is not otherwise stated, the adjustment, increase or decrease refers to the underband measurement or cup size that has been determined in the previous step (or the most recent step in which an underband measurement or cup size is established or adjusted).

In the discussion above, cup sizes are adjusted by one or more sizes during various steps of the method. This discussion is based on the sizing system which is consistently used in the UK, in which sizes are labelled with letters, such as AA, A, B, C, D, DD and so on. While some manufacturers may use the letters to refer to different sizes, most manufacturers adhere to this system or a close variant of it. In the method discussed in this document, cup sizes are therefore adjusted by one or more "size units" according to this convention, as it does not make sense to refer to a half or other fraction of a size. However, it should be understood that this method may be applied to any other sizing system or convention (for instance, as may be used in countries other than the UK), and the skilled reader will know how the method may be adjusted to be compatible with other sizing systems or conventions.

Figure 4 sets out a flow chart which shows steps in an exemplary method in a particular order. It should be understood that, unless where the steps must be carried out in a particular order, it is envisaged that the steps may be carried out in a different sequence, and the invention is not limited to the exact order of steps shown in figure 4 and described above.

In some of the appended claims it is stated that the final underband measurement or cup size is "based on" a calculated underband measurement or cup size. This means that the calculated underband measurement or cup size is used to determine the final underband measurement or cup size, but this calculated underband measurement or cup size may be an interim parameter which will subsequently be adjusted again in a subsequent step of the method, Hence, where the final underband measurement or cup size is "based on" a calculated underband measurement or cup size, this means that the final underband measurement or cup size either is the calculated underband measurement or cup size, or is the calculated underband measurement or cup size as adjusted by subsequent steps in the method.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention, the scope of which is defined by the claims.

## Claims

1. A method of determining bra fitting measurements for a subject, comprising the steps of:
determining an underband measurement and a cup size for an existing bra of the subject;
taking a current measurement of the underband measurement of the subject, to determine an initial underband measurement;
analysing the fit of the cups of the existing bra on the subject to reach a first calculated cup size, wherein the step of analysing the fit of the cups of the existing bra on the subject to reach the first calculated cup size comprises:
if the subject's breasts bulge at the fronts of the cups of the existing bra, or at the sides of the cups of the existing bra, but not both, increasing the first calculated cup size by a first cup size amount;
if the subject's breasts bulge both at the fronts of the cups and at the sides of the cups of the existing bra, increasing the first calculated cup size by a second cup size amount, which is greater than the first cup size amount; or
if the subject's breasts do not bulge at the fronts of the cups of the existing bra, or at the sides of the cups of the existing bra, making no adjustment to the first calculated cup size;
if the cup size of the existing bra is below a first cup size threshold and the first calculated cup size is equal to or greater than the first cup size threshold, then adding a first amount to the initial underband measurement to reach a first adjusted underband measurement; or
if the cup size of the existing bra and the first calculated cup size are both below the first cup size threshold, or if the cup size of the existing bra and the first calculated cup size are both above the first cup size threshold, then:
comparing the existing cup size against a second cup size threshold;
if the existing cup size is greater than or equal to the second cup size threshold, then adding a second amount to the initial underband measurement to reach a first adjusted underband measurement; or
if the existing cup size is less than the second cup size threshold, then adding a third amount to the initial underband measurement to reach a first adjusted underband measurement; and
determining a final underband measurement and a final cup size for the subject, wherein the final underband measurement is the first adjusted underband measurement, and the final cup size is the first calculated cup size.

2. A method according claim 1, comprising the steps of:
comparing the initial underband measurement against a threshold distance;
if the initial underband measurement is more than the threshold distance, adding a fourth amount to the initial underband measurement to reach the first adjusted underband measurement, instead of adding the first or second amount to the initial underband measurement, and preferably wherein the fourth amount is less than the first amount.

3. A method according to claim 1 or 2, further comprising the steps of:
comparing the final underband size to the underband measurement of the existing bra;
If the final underband size is greater than the underband measurement of the existing bra, reducing the calculated cup size by a determined amount; or
If the final underband size is less than the underband measurement of the existing bra, increasing the calculated cup size by a determined amount.

4. A method according to claim 3, wherein the final underband size is constrained to deviate from the underband size of the existing bra by a maximum amount, and preferably wherein the maximum amount is 2.54cm (one inch), and the determined amount by which the calculated cup size is increased or reduced is one cup size.

5. A method according to any preceding claim, further comprising defining a maximum difference between the final cup size and the cup size of the existing bra, so that if a final cup size is determined to be different from the cup size of the existing bra by more than the maximum difference the final cup size is adjusted to be different from the cup size of the existing bra by the maximum difference, and preferably wherein the maximum difference is three cup sizes.

6. A method of providing a bra, comprising:
determining a final underband measurement and a final cup size by the method of any preceding claim; and
providing a bra having an underband measurement and cup size which correspond to the final underband measurement and cup size.

7. A method according to claim 6, wherein the step of providing a bra comprises the step of selecting the bra from among a plurality of bras having different measurements.

8. A method according to claim 6 or 7, comprising:
determining whether the subject has narrow, medium or wide shoulders;
determining whether or not the subject has a gap above a determined size between her breasts; and
providing only certain styles of bra, and excluding one or more styles of bra, based on the width of the subject's shoulders and whether or not the subject has a gap above the determined size between her breasts, and preferably wherein:
if the subject has narrow shoulders; or
if the subject has medium shoulders and does not have a gap above the determined size between her breasts,
a balcony style of bra is excluded, or wherein:
if the subject has broad shoulders; or
if the subject has medium shoulders and does have a gap above the determined size between her breasts,
a plunge style of bra is excluded.

9. A computer program comprising computer program code adapted to carry out all of the steps of any of any one of the preceding claims when the program is run on a computer.

10. A computer readable medium comprising a computer program according to claim 9.

## Patentansprüche

1. Verfahren zum Ermitteln von Büstenhalter-Passmaßen für eine Trägerin, umfassend die folgenden Schritte:
Ermitteln eines Unterbrustbandmaßes und einer Körbchengröße bei einem existierenden Büstenhalter der Trägerin;
Vornehmen einer aktuellen Messung des Unterbrustbandmaßes der Trägerin, um ein anfängliches Unterbrustbandmaß zu ermitteln;
Analysieren der Passform der Körbchen des existierenden Büstenhalters an der Trägerin, um eine erste berechnete Körbchengröße zu erhalten, worin der Schritt des Analysierens der Passform der Körbchen des existierenden Büstenhalters an der Trägerin zum Erhalten der ersten berechneten Körbchengröße Folgendes umfasst:
wenn die Brüste der Trägerin auf den Vorderseiten der Körbchen des existierenden Büstenhalters oder an den Seiten der Körbchen des existierenden Büstenhalters, aber nicht beiden, hervorstehen, Erhöhen der ersten berechneten Körbchengröße um einen ersten Körbchengrößenbetrag;
wenn die Brüste der Trägerin sowohl auf den Vorderseiten der Körbchen als auch an den Seiten der Körbchen des existierenden Büstenhalters hervorstehen, Erhöhen der ersten berechneten Körbchengröße um einen zweiten Körbchengrößenbetrag, der größer als der erste Körbchengrößenbetrag ist; oder
wenn die Brüste der Trägerin nicht auf den Vorderseiten der Körbchen des existierenden Büstenhalters, oder auf den Seiten der Körbchen des existierenden Büstenhalters, hervorstehen, erfolgt keine Justierung der ersten berechneten Körbchengröße;
wenn die Körbchengröße des existierenden Büstenhalters unterhalb eines ersten Körbchengrößen-Schwellwertes und die erste berechnete Körbchengröße größer gleich dem ersten Körbchengrößen-Schwellwert ist, anschließendes Hinzufügen eines ersten Betrages zum anfänglichen Unterbrustbandmaß, um ein erstes justiertes Unterbrustbandmaß zu erhalten; oder
wenn die Körbchengröße des existierenden Büstenhalters und die erste berechnete Körbchengröße beide unterhalb des ersten Körbchengrößen-Schwellwertes sind, oder wenn die Körbchengröße des existierenden Büstenhalters und die erste berechnete Körbchengröße beide oberhalb des ersten Körbchengrößen-Schwellwertes sind, dann:
Vergleichen der existierenden Körbchengröße mit einem zweiten Körbchengrößen-Schwellwert;
wenn die existierende Körbchengröße größer gleich dem zweiten Körbchengrößen-Schwellwert ist, anschließendes Hinzufügen eines zweiten Betrages zum anfänglichen Unterbrustbandmaß, um ein erstes justiertes Unterbrustbandmaß zu erhalten; oder
wenn die existierende Körbchengröße weniger als der zweite Körbchengrößen-Schwellwert ist, anschließendes Hinzufügen eines dritten Betrages zum anfänglichen Unterbrustbandmaß, um ein erstes justiertes Unterbrustbandmaß zu erhalten; und
Ermitteln eines abschließenden Unterbrustbandmaßes und einer abschließenden Körbchengröße für die Trägerin, worin das abschließende Unterbrustbandmaß das erste justierte Unterbrustbandmaß ist und die abschließende Körbchengröße die erste berechnete Körbchengröße ist.

2. Verfahren nach Anspruch 1, umfassend die folgenden Schritte:
Vergleichen des anfänglichen Unterbrustbandmaßes mit einem Schwellenabstand;
wenn das anfängliche Unterbrustbandmaß mehr als der Schwellenabstand ist, Hinzufügen eines vierten Betrages zum anfänglichen Unterbrustbandmaß, um das erste justierte Unterbrustbandmaß zu erhalten, anstatt des Hinzufügens des ersten oder zweiten Betrages zum anfänglichen Unterbrustbandmaß, und vorzugsweise, worin der vierte Betrag weniger als der erste Betrag ist.

3. Verfahren nach Anspruch 1 oder 2, ferner umfassend die folgenden Schritte:
Vergleichen der abschließenden Unterbrustbandgröße mit dem Unterbrustbandmaß des existierenden Büstenhalters;
Wenn die abschließende Unterbrustbandgröße größer als das Unterbrustbandmaß des existierenden Büstenhalters ist, Reduzieren der berechneten Körbchengröße um einen ermittelten Betrag;
oder
Wenn die abschließende Unterbrustbandgröße weniger als das Unterbrustbandmaß des existierenden Büstenhalters ist, Erhöhen der berechneten Körbchengröße um einen ermittelten Betrag.

4. Verfahren nach Anspruch 3, worin die abschließende Unterbrustbandgröße darauf beschränkt ist, von der Unterbrustbandgröße des existierenden Büstenhalters um einen maximalen Betrag abzuweichen, und vorzugsweise, worin der maximale Betrag 2,54 cm (ein Zoll) ist und der ermittelte Betrag, um den die berechnete Körbchengröße erhöht oder verringert wird, eine Körbchengröße ist.

5. Verfahren nach irgendeinem vorhergehenden Anspruch, ferner umfassend das Definieren einer maximalen Differenz zwischen der abschließenden Körbchengröße und der Körbchengröße des existierenden Büstenhalters, sodass, wenn ermittelt wird, dass sich eine abschließende Körbchengröße von der Körbchengröße des existierenden Büstenhalters um mehr als die maximale Differenz unterscheidet, die abschließende Körbchengröße so justiert wird, dass sie sich von der Körbchengröße des existierenden Büstenhalters um die maximale Differenz unterscheidet, und vorzugsweise, worin die maximale Differenz drei Körbchengrößen ist.

6. Verfahren zum Bereitstellen eines Büstenhalters, umfassend:
Ermitteln eines abschließenden Unterbrustbandmaßes und einer abschließenden Körbchengröße durch das Verfahren nach irgendeinem vorhergehenden Anspruch; und
Bereitstellen eines Büstenhalters mit einem Unterbrustbandmaß und einer Körbchengröße, die dem abschließenden Unterbrustbandmaß und der abschließenden Körbchengröße entsprechen.

7. Verfahren nach Anspruch 6, worin der Schritt des Bereitstellens eines Büstenhalters den Schritt der Auswahl des Büstenhalters aus einer Mehrzahl von Büstenhaltern mit verschiedenen Maßen umfasst.

8. Verfahren nach Anspruch 6 oder 7, umfassend:
Ermitteln dessen, ob die Trägerin schmale, mittlere oder breite Schultern hat;
Ermitteln dessen, ob die Trägerin eine Lücke oberhalb einer ermittelten Größe zwischen ihren Brüsten hat oder nicht; und
Bereitstellen nur bestimmter Büstenhalterstile, und Ausschließen eines oder mehrerer Büstenhalterstile, ausgehend von der Breite der Schultern der Trägerin und davon, ob die Trägerin eine Lücke oberhalb der ermittelten Größe zwischen ihren Brüsten hat oder nicht, und vorzugsweise, worin:
wenn die Trägerin schmale Schultern hat; oder
wenn die Trägerin mittlere Schultern hat und keine Lücke oberhalb der ermittelten Größe zwischen ihren Brüsten hat,
ein Balkonbüstenhalterstil ausgeschlossen ist, oder worin:
wenn die Trägerin breite Schultern hat; oder
wenn die Trägerin mittlere Schultern hat und eine Lücke oberhalb der ermittelten Größe zwischen ihren Brüsten hat,
ein Decollete-Büstenhalterstil ausgeschlossen ist.

9. Computerprogramm umfassend Computerprogrammcode, das dafür ausgelegt ist, alle Schritte nach einem beliebigen der vorhergehenden Ansprüche auszuführen, wenn das Programm auf einem Computer läuft.

10. Computerlesbares Medium umfassend ein Computerprogramm nach Anspruch 9.

## Revendications

1. Un procédé permettant de déterminer des mesures d'ajustement d'un soutien-gorge pour un sujet, comprenant les étapes consistant à :
déterminer une mesure du dessous de poitrine et une taille de bonnet d'un soutien-gorge existant du sujet ;
prendre une mesure actuelle de la mesure du dessous de poitrine du sujet, pour déterminer une mesure initiale du dessous de poitrine ;
analyser l'ajustement des bonnets du soutien-gorge existant sur le sujet pour atteindre une première taille de bonnet calculée, dans lequel l'étape consistant à analyser l'ajustement des bonnets du soutien-gorge existant sur le sujet pour atteindre la première taille de bonnet calculée consiste à :
si les seins du sujet débordent à l'avant des bonnets du soutien-gorge existant ou sur les côtés des bonnets du soutien-gorge existant, mais pas les deux, augmenter la première taille de bonnet calculée d'une première quantité de taille de bonnet ;
si les seins du sujet débordent à la fois à l'avant des bonnets et sur les côtés des bonnets du soutien-gorge existant, augmenter la première taille de bonnet calculée d'une deuxième quantité de taille de bonnet, qui est supérieure à la première quantité de taille de bonnet ; ou
si les seins du sujet ne débordent pas à l'avant des bonnets du soutien-gorge existant ou sur les côtés des bonnets du soutien-gorge existant, ne faire aucun ajustement de la première taille de bonnet calculée ;
si la taille de bonnet du soutien-gorge existant est au-dessous d'un premier seuil de taille de bonnet et que la première taille de bonnet calculée est égale ou supérieure au premier seuil de taille de bonnet, ajouter une première quantité à la mesure initiale du dessous de poitrine pour atteindre une première mesure du dessous de poitrine ajusté ; ou
si la taille de bonnet du soutien-gorge existant et la première taille de bonnet calculée sont toutes deux au-dessous du premier seuil de taille de bonnet, ou si la taille de bonnet du soutien-gorge existant et la première taille de bonnet calculée sont toutes deux au-dessus du premier seuil de taille de bonnet, alors :
comparer la taille du bonnet existant à un deuxième seuil de taille de bonnet ;
si la taille du bonnet existant est supérieure ou égale au deuxième seuil de taille de bonnet, ajouter une deuxième quantité à la mesure initiale du dessous de poitrine pour atteindre une première mesure du dessous de poitrine ajusté ; ou
si la taille du bonnet existant est inférieure au deuxième seuil de taille de bonnet, ajouter une troisième quantité à la mesure initiale du dessous de poitrine pour atteindre une première mesure du dessous de poitrine ajusté ; et
déterminer une mesure finale du dessous de poitrine et une taille finale de bonnet pour le sujet, dans lequel la mesure finale du dessous de poitrine est la première mesure du dessous de poitrine ajusté, et la taille finale de bonnet est la première taille de bonnet calculée.

2. Un procédé selon la revendication 1, comprenant les étapes consistant à :
comparer la mesure initiale du dessous de poitrine à une distance de seuil ;
si la mesure initiale du dessous de poitrine est supérieure à la distance de seuil, ajouter une quatrième quantité à la mesure initiale du dessous de poitrine pour atteindre la première mesure du dessous de poitrine ajusté, au lieu d'ajouter la première ou la deuxième quantité à la mesure initiale du dessous de poitrine, et de préférence dans lequel la quatrième quantité est inférieure à la première quantité.

3. Un procédé selon la revendication 1 ou 2, comprenant en outre les étapes consistant à :
comparer la dimension finale du dessous de poitrine à la mesure du dessous de poitrine du soutien-gorge existant ;
si la dimension finale du dessous de poitrine est supérieure à la mesure du dessous de poitrine du soutien-gorge existant, diminuer la taille de bonnet calculée d'une quantité déterminée ; ou
si la dimension finale du dessous de poitrine est inférieure à la mesure du dessous de poitrine du soutien-gorge existant, augmenter la taille de bonnet calculée d'une quantité déterminée.

4. Un procédé selon la revendication 3, dans lequel la dimension finale du dessous de poitrine est limitée à s'écarter de la dimension du dessous de poitrine du soutien-gorge existant d'une quantité maximum, et de préférence dans lequel la maximum quantité est 2,54 cm (un pouce), et la quantité déterminée par laquelle la taille de bonnet calculée est augmentée ou diminuée est une taille de bonnet.

5. Un procédé selon l'une quelconque des revendications précédentes, consistant en outre à définir une différence maximum entre la taille finale de bonnet et la taille de bonnet du soutien-gorge existant, de telle sorte que, si une taille finale de bonnet est déterminée être différente de la taille de bonnet du soutien-gorge existant de plus de la différence maximum, la taille finale de bonnet est ajustée pour être différente de la taille de bonnet du soutien-gorge existant de la différence maximum, et de préférence dans lequel la différence maximum est trois tailles de bonnet.

6. Un procédé permettant de fournir un soutien-gorge, consistant à :
déterminer une mesure finale du dessous de poitrine et une taille finale de bonnet par le procédé de l'une quelconque des revendications précédentes ; et
fournir un soutien-gorge ayant une mesure du dessous de poitrine et une taille de bonnet qui correspondent à la mesure finale du dessous de poitrine et à la taille de bonnet.

7. Un procédé selon la revendication 6, dans lequel l'étape consistant à fournir un soutien-gorge comprend l'étape consistant à sélectionner le soutien-gorge parmi une pluralité de soutiens-gorge ayant des mesures différentes.

8. Un procédé selon la revendication 6 ou 7, consistant à :
déterminer si le sujet a des épaules étroites, moyennes ou larges ;
déterminer si le sujet a un espace au-dessus d'une taille déterminée entre ses seins ; et
fournir uniquement certains styles de soutien-gorge, et exclure un ou plusieurs styles de soutien-gorge, sur la base de la largeur des épaules du sujet et de si le sujet a un espace au-dessus de la taille déterminée entre ses seins, et de préférence dans lequel :
si le sujet a des épaules étroites ; ou
si le sujet a des épaules moyennes et n'a pas un espace au-dessus de la taille déterminée entre ses seins,
un style de soutien-gorge à balconnet est exclu, ou dans lequel :
si le sujet a des épaules larges ; ou
si le sujet a des épaules moyennes et n'a pas un espace au-dessus de la taille déterminée entre ses seins,
un style of soutien-gorge plongeant est exclu.

9. Un programme informatique comprenant un code de programme informatique adapté pour effectuer toutes les étapes consistant en l'une quelconque des revendications précédentes lorsque le programme est exécuté sur un ordinateur.

10. Un support lisible par ordinateur comprenant un programme informatique selon la revendication 9.
